(19) Europäisches Patentamt
European Patent Office
Office européen des brevets

(11) EP 2 159 040 B1

(12) **EUROPEAN PATENT SPECIFICATION**

(45) Date of publication and mention
of the grant of the patent:
**07.09.2016 Bulletin 2016/36**

(51) Int Cl.:
**B29D 11/00** [(2006.01)]     **G02B 1/04** [(2006.01)]
**G02B 3/00** [(2006.01)]

(21) Application number: **08075732.1**

(22) Date of filing: **26.08.2008**

(54) **Micro optical articles, process for their production and uses**

Mikrooptische Artikel sowie Verfahren zu deren Herstellung und Verwendung

Articles micro-optiques, leur procédé de production et utilisations

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**03.03.2010 Bulletin 2010/09**

(73) Proprietor: **Micro Resist Technology Gesellschaft
für chemische
Materialien spezieller Photoresistsysteme mbH
12555 Berlin (DE)**

(72) Inventors:
• **Grützner, Gabi
12685 Berlin (DE)**
• **Fink, Marion
12487 Berlin (DE)**
• **Pfeiffer, Karl
16356 Werneuchen (DE)**
• **Brugger, Juergen
1302 Vufflens-la-Ville (CH)**
• **Fakhfouri, Vahid
1009 Pully (CH)**
• **Kim, Joo Yeon
1007 Lausanne (CH)**

(74) Representative: **Feldmann, Ute et al
Patentanwaltskanzlei Feldmann
Friedrichstrasse 90
10117 Berlin (DE)**

(56) References cited:
**JP-A- 2005 254 097     US-A1- 2006 012 060
US-B1- 6 294 217**

• **DANZEBRINK R ET AL: "Deposition of micropatterned coating using an ink-jet technique" THIN SOLID FILMS, ELSEVIER-SEQUOIA S.A. LAUSANNE, CH, vol. 351, no. 1-2, 30 August 1999 (1999-08-30), pages 115-118, XP004183077 ISSN: 0040-6090**
• **FAKHFOURI V ET AL: "Inkjet printing of SU-8 for polymer-based MEMS a case study for microlenses" 2008 21ST IEEE INTERNATIONAL CONFERENCE ON MICRO ELECTRO MECHANICAL SYSTEMS - MEMS '08 IEEE PISCATAWAY, NJ, USA, 2007, pages 407-410, XP002513303 ISBN: 978-1-4244-1792-6**
• **CARTER ET AL: "Fabricating optical fiber imaging sensors using inkjet printing technology: A pH sensor proof-of-concept" BIOSENSORS & BIOELECTRONICS, ELSEVIER SCIENCE PUBLISHERS, BARKING, GB, vol. 21, no. 7, 15 January 2006 (2006-01-15), pages 1359-1364, XP005215723 ISSN: 0956-5663**
• **LORENZ H ET AL: "SU-8: a low-cost negative resist for MEMS", JOURNAL OF MICROMECHANICS & MICROENGINEERING, INSTITUTE OF PHYSICS PUBLISHING, BRISTOL, GB, vol. 7, no. 3, 1 September 1997 (1997-09-01), pages 121-124, XP020069105, ISSN: 0960-1317, DOI: 10.1088/0960-1317/7/3/010**
• **M. Shaw ET AL: "Improving the process capability of SU-8", Microsystem Technologies, vol. 10, no. 1, 1 December 2003 (2003-12-01), pages 1-6, XP055188618, ISSN: 0946-7076, DOI: 10.1007/s00542-002-0216-4**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **VOIGT ET AL: "Improved properties of epoxy nanocomposites for specific applications in the field of MEMS/NEMS", MICROELECTRONIC ENGINEERING, ELSEVIER PUBLISHERS BV., AMSTERDAM, NL, vol. 84, no. 5-8, 6 May 2007 (2007-05-06), pages 1075-1079, XP022061949, ISSN: 0167-9317, DOI: 10.1016/J.MEE.2007.01.046**
- **MARIA NORDSTROM ET AL: "Single-Mode Waveguides With SU-8 Polymer Core and Cladding for MOEMS Applications", JOURNAL OF LIGHTWAVE TECHNOLOGY, IEEE SERVICE CENTER, NEW YORK, NY, US, vol. 10, no. 5, 1 May 2007 (2007-05-01), pages 1284-1289, XP011180047, ISSN: 0733-8724**

Remarks:
The file contains technical information submitted after the application was filed and not included in this specification

## Description

Field of the invention

This invention relates to a process for production of a micro optical article using an ink-jet printer, a micro optical article obtainable by the inventive process, a composition suitable to produce the inventive micro optical articles, a use of the inventive composition in the manufacture of a micro optical article using an ink-jet printer and a use of the inventive micro optical article in optics, opto-electronics or as a molding structure according to the independent claims, respectively.

Background of the invention

Micro optical articles, in particular a micro optical lens and micro optical lens arrays (synonym: micro lens / micro lens array) are, due to their excellent light collecting efficiency and low optical loss, widely applied for micro-optical and micro-opto-electronical applications, such as imaging sensors, diodes, light emitting diodes (LED) or laser diodes, photodetectors, and photovoltaic devices.

In the 1980's charge-coupled devices (CCD) based optical detecting systems were introduced and have until now been largely used. Coupling with micro-lenses provides a counter balance to the low sensitivity in high-density image sensors by focusing and, accordingly, increasing the light input.

Micro optical lenses can, according to their performance principals, be categorized as refractive lenses, diffractive lenses or mixed refractive/diffractive lenses. A refractive lens bends or focuses a light beam by geometric rules. A diffractive lens alters the path of light based on Fourier optics. A mixed refractive/diffractive lens typically includes a refractive lens having the surface thereof textured with diffracting patterns to correct for chromatic aberrations.

A number of techniques have been developed to manufacture refractive micro lenses, such as the photoresist flow method, the UV proximity printing method, grayscale gel mask method, etc. However, those techniques still have some drawbacks and the fabrication cost thereof is, due to the multiple method steps, relatively high.

Nowadays, the ink-jet printing technology has also been adapted and developed for the manufacture of micro lenses. Using ink-jet printing technology, materials can be dispensed on a substrate without any contact with the substrate itself and can additionally be printed on a large area with minimized material waste when the drop-on-demand (DOD) mode is applied. In DOD mode, a droplet is generated from a tiny orifice (hereinafter called the nozzle) at due time and position, when an actuating pulse is applied to an actuator (*e.g.*, thermal or piezo-actuator). In such systems, droplets having a diameter approximately equal to or smaller than the orifice diameter are generated.

Due to the fact that the nozzles for dispensing the material by ink-jet printing technology are comparatively small in diameter, in particular have a diameter in the micron range, the inkjet printing material must meet appropriate properties in order to be dispensable to the surface of the substrate.

EP 0 494 924 B1 discloses a method of making an aspheric lens from a liquid monomer, characterized by the steps of providing a pedestal having an end surface having a perimeter formed by a sharp edge, applying a droplet of a liquid monomer to said end surface, supporting said pedestal with said end surface horizontal and facing downwards, the droplet of monomer being pendant therefrom, and curing said monomer.

In B. P. Keyworth et al. (Appl.Opt. 36 2198 - 2202) and J. C. Carter et al. (UCRL-JRNL-210157 2 (2005)) a method of manufacturing micro lenses by using the DOD mode ink-jet printing technology is disclosed. The dispensing solution used therein comprises multi functional epoxy-monomers.

The state of the art described hereinbefore is characterized in that the dispensing solutions comprise monomers, which still have to be polymerized when producing the micro optical articles.

In DE 100 57 526 A1 an ink-jet printing method for manufacturing a micro lens is disclosed, wherein micro lenses can be manufactured in the range of 100 $\mu$m to 200 mm in diameter. The dispensing solution is formed by adding water and hydrochloric acid to glycidylpropyltrimethoxysilane and decomposition of alcohol.

In WO 95/23037 A1 a method for printing of micro-optical components onto optical substrates or active devices is disclosed to create optical circuit elements as well as micro-optical components and systems, such as plano-convex circular, cylindrical or square lenslets, anamorphic lenslets, waveguides, couplers, mixers and switches and monolithic lenses deposited directly onto optical components such as diode lasers and optical fibers.

In the field of micro-electro-mechanical systems (MEMS), the negative epoxy based resist SU-8 has contributed largely to the advances for the molding of high aspect ration micro-devices. Moreover, the material itself has very interesting properties, e.g., chemical inertness once cross linked and elasticity modulus for mechanical applications, allowing its use as a permanent material for polymer MEMS. In addition, the transparency of the epoxy makes it an interesting candidate for micro optical applications.

In V. Fakhfouri et al. MEMS 2/2008 it has for the first time been disclosed that the epoxy based resist SU-8 (Mico.Chem.Corp. Newton MA 02464) was used for producing micro optical lenses with a radius of 40-120 $\mu$m by the ink-jet printing technology. SU-8 is diluted in $\gamma$-butyrolactone as an inert solvent to produce such micro lenses. The drawback with respect to such a production process relates mainly to instability of the droplet generation and the transparency of the final material, which is not at its maximum.

"Deposition of micropatterned coating using an ink-jet technique," R. Danzebrink et al, Thin Solid Films, Elsevier-Sequoia S.A. Lausanne; CH, vol. 351, no. 1-2, 30 August 1999, pages 115-118, XP004183077, ISSN: 0040-6090 discloses a process of producing one or more separate micro optical articles using an ink-jet printer, wherein the process comprises or consists of the following steps:

a) providing an ink-jet suitable composition comprising or consisting of an organic-inorganic hybridpolymer and a polymerization starter together an inert solvent wherein the organic-inorganic hybridpolymer comprises or consists of one or more (meth) acrylate-based organic units connected to an inorganic Si-O-Si-network, wherein the polymerization starter is/are one or more polymerization starters selected from the group of photo initiators, and wherein the inert solvent is ethanol,

b) depositing one or more separate droplets of the composition of step a) onto a surface of a substrate with an ink-jet-printer, and

c) curing the one or more separate droplets of step b) to form the one or more separate micro-optical articles.

JP 2005 254097 A discloses a composition suitable for producing a micro optical article using an ink-jet printer, wherein the composition comprises or consists of the following components: an epoxy resin and an inert solvent, wherein the epoxy resin comprises one or more epoxy resins based on phenol and wherein the inert solvent is/are one or more inert solvents selected from the group consisting of heptanone and methylisobutylketone.

With respect to inorganic-organic hybridpolymers, such as ORganically MOdified CERamics (ORMOCER®, Frauenhofer Institute for Silicate Research (ISC), Würzburg, Germany), micro optical articles have been produced by reactive stamping or by usual photolithographic methods.

Accordingly, the aim of the present invention is to provide a process for producing micro optical articles, preferably micro optical lenses or micro optical lens arrays, wherein

- the production process is time- and/or cost-saving with minimized material waste,

- the suitable depositing solution allows to produce a stable and reproducible generation of droplets, both in continuous and drop-on-demand modes, for direct patterning of micro optical articles,

- the particular shape of the inkjet-printed micro optical articles after deposition (e.g. semispherical, parabolic) can be exploited in optical or opto-electronical applications,

- the production process allows for manufacturing micro optical articles with adjustable (tunable) optical, thermal and/or mechanical properties, e.g. adjustable color, optical transparency, brittleness, refractive indexes, in particular different refractive indexes than the starting material(s), and/or

- the production process allows for manufacturing micro optical articles on solid or flexible substrates.

Summary of the invention

The subject matter of present invention according to the independent claims solves one or more of the technical problems as set out above.

Accordingly, a first aspect of the invention relates to a process of producing micro optical one or more separate articles using an ink-jet printer, characterized in that the process comprises or consists of the following steps:

a) providing an ink-jet suitable composition comprising or consisting of

i. an organic-inorganic hybridpolymer and a polymerization starter together with an inert solvent

- wherein the organic-inorganic hybridpolymer comprises or consists of one or more (meth) acrylate-based organic units connected to an inorganic Si-O-Si-network,
- wherein the polymerization starter is/are one or more polymerization starters selected from the group of photo initiators, and
- wherein the inert solvent is/are one or more inert solvents selected from the group consisting of gamma-butyrolactone, cyclopentanone, heptanone, propylenglycolmonomethyletheracetate and methylisobutylketone, or

ii. an epoxy resin, a polymerization starter and an inert solvent together with a reactive diluent and/or

- wherein the epoxy resin comprises or consists of one or more epoxy resins based on phenol,
- wherein the polymerization starter is/are one or more polymerization starters selected from the group of photo initiators,
- wherein the inert solvent is/are one or more inert solvents selected from the group consisting of gamma-butyrolactone, cyclopentanone, heptanone, propylenglycolmonomethyletheracetate and methylisobutylketone, and
- wherein the reactive diluent is/are one or more reactive diluents selected from the group consisting of multifunctional epoxy group containing monomers,

b) depositing one or more separate droplets of the composition of step a) onto a surface of a substrate with an ink-jet printer, and
c) curing the one or more separate droplets of step b) to form the one or more micro optical articles.

A second aspect of the present invention relates to a micro optical article obtainable by the inventive process as set out hereinbefore.

A third aspect of the present invention relates to an ink-jet suitable composition suitable for producing an inventive micro optical article using an ink-jet printer, characterized in that the composition comprises or consists of the following components:

i. an organic-inorganic hybridpolymer and a polymerization starter together with an inert solvent

- wherein the organic-inorganic hybridpolymer comprises or consists of one or more (meth) acrylate-based organic units connected to an inorganic Si-O-Si-network,
- wherein the polymerization starter is/are one or more polymerization starters selected from the group of photo initiators, and
- wherein the inert solvent is gamma-butyrolactone, or

ii. an epoxy resin, a polymerization starter and an inert solvent together with a reactive diluent

- wherein the epoxy resin comprises or consists of one or more epoxy resins based on phenol,
- wherein the polymerization starter is/are one or more polymerization starters selected from the group of photo initiators,
- wherein the inert solvent is/are one or more inert solvents selected from the group consisting of gamma-butyrolactone, cyclopentanone, heptanone, propylenglycolmonomethyletheracetate and methylisobutylketone, and
- wherein the reactive diluent is/are one or more reactive diluents selected from the group consisting of multifunctional epoxy group containing monomers.

A fourth aspect of the present invention relates to a use of the inventive composition in the manufacture of a micro optical article using an ink-jet printer.

A fifth aspect of the present invention relates to a use of the inventive micro optical article in optics, opto-electronics or as a molding structure.

Preferred embodiments of the inventive subject matter according to the first through fifth aspect are disclosed in the dependent claims as well as in the Figures and the following detailed description and are combinable with each other, provided the combinations are reasonable to a person skilled in the art.

Brief description of the figures

Fig 1        is a schematic drawing of the inventive drop-on-demand (DOD) ink-jet printing process to produce the inventive micro optical lens array.

Fig. 2       is a diagram of contact angles of water droplets on various (surface-functionalized) substrates.

Fig. 3       is a scanning electron microscopic image of contact angles of droplets of water and an inventive composition i) on glass, SAM glass and black Si.

Fig. 4a,b    are microscopic images of part of an 30 x 30 inventive micro optical lens array, inkjet printed with only one droplet per lens using an inventive composition i).

Fig. 5a,b,c    are phase images of an inventive micro optical lens of inventive composition i) obtained with DHM™ T1000: (a) unwrapped, (b) 3D perspective, and (c) height profile taken along the dashed line in (a).

Fig. 6a,b,c    are scanning electron microscopic images of an array of SU-8 single droplet pixels forming the letter "S" deposited in DOD mode on a SAM-coated silicon substrate.

Fig. 6d,e    are scanning electron microscopic images of SU-8 single droplet pixels and an SU-8 double droplet pixel deposited in DOD mode on a SAM-coated silicon substrate.

Detailed description of the invention

The invention is based on the surprising finding that by providing an inventive ink-jet suitable composition comprising or consisting of

   i. an organic-inorganic hybridpolymer and a polymerization starter together with an inert solvent

   -    wherein the organic-inorganic hybridpolymer comprises or consists of one or more (meth) acrylate-based organic units connected to an inorganic Si-O-Si-network,
   -    wherein the polymerization starter is/are one or more polymerization starters selected from the group of photo initiators, and
   -    wherein the inert solvent is/are one or more inert solvents selected from the group consisting of gamma-butyrolactone, cyclopentanone, heptanone, propylenglycolmonomethyletheracetate and methylisobutylketone, or

   ii. an epoxy resin, a polymerization starter and an inert solvent together with a reactive diluent

   -    wherein the epoxy resin comprises or consists of one or more epoxy resins based on phenol,
   -    wherein the polymerization starter is/are one or more polymerization starters selected from the group of photo initiators,
   -    wherein the inert solvent is/are one or more inert solvents selected from the group consisting of gamma-butyrolactone, cyclopentanone, heptanone, propylenglycolmonomethyletheracetate and methylisobutylketone, and
   -    wherein the reactive diluent is/are one or more reactive diluents selected from the group consisting of multifunctional epoxy group containing monomers

in the inventive process (reproducible) stable droplets can be generated on the surface of solid or flexible substrates, which can then be cured to the inventive micro optical articles in accordance with the inventive production process. The stable droplets can be comprised by single, double or more droplet pixels, i.e., one, two or more droplets ejected from the ink-jet printer form the stable droplet.

Furthermore, the inventive production process allows for both a time and cost saving production of micro optical articles, as only a few steps have to be conducted and instead of monomers a polymeric starting material, *i.e.* the organic-inorganic hybridpolymer or the epoxy resin, is used.

Moreover, the inventive production process allows, due to the use of reactive diluents and optionally of nanoparticles in the inventive composition, for adjusting the optical, thermal and mechanical properties, in particular the optical profiles to result in the desired micro optical article with, e.g., the desired refractive indexes, the brittleness, color and transparency.

In addition, the ink-jet printing technology allows for rapid prototyping, high precision dispensing, non-contact multi-material deposition, low material waste and 3D patterning.

Accordingly, the present invention provides a process and the materials for (preferably data-driven) production of micro optical articles such as a refractive micro optical lens, refractive micro optical lens array and micro optical lenses or micro optical lens arrays deposited on coupling devices, such as devices of fiber optics, diodes, more preferably light-emitting-diodes or laser diodes, photodetectors, more preferably solid state photodetectors, integrated optical couplers or decouplers.

As the inventive process is based on the use of an ink-jet printer for producing inventive micro optical articles, commercially available ink-jet printers can be used.

In accordance with the inventive process the inventive composition is ink-jet-printed by using a printer head comprising one or more nozzles with a diameter in the micron range, preferably between 1 to 200 $\mu$m, more preferred between 20

to 100 μm, most preferred between 30 to 70 μm. Nozzles can be of any conventional material, including glass.

There are two basic types of commercial ink-jet printers, thermal and piezo-actuated:

Thermal ink-jet printing devices heat the inventive composition to create a bubble that forces a droplet of composition out of the nozzle. Tiny resistors may be used to rapidly heat a thin layer of the liquid composition causing the bubble to form. As the nozzle cools and the bubble collapses, it creates a vacuum that draws more composition from a reservoir device to replace the composition material that was ejected. The time required to heat and then cool the nozzle theoretically slows printing speeds. The process is repeated for the deposition of every separate droplet on the substrate. In a preferred embodiment a computer-controlled x-y-θ stage allows i) the positioning of the substrate with respect to the impact location or ii) the positioning of the ink-jet printer head with respect to the substrate.

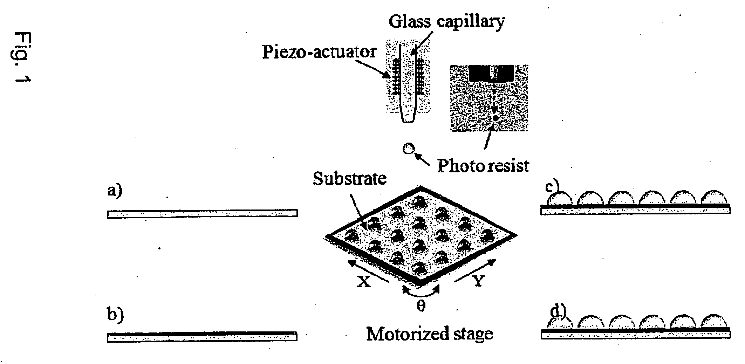

Fig. 1 shows a schematic drawing of a set up for the inventive process using a piezo-actuated ink-jet printer head in drop-on-demand (DOD) mode and the process flow used to produce the inventive micro optical article is shown. In Fig. 1 a) represents a cleaned glass substrate, b) represents a self assembled monolayer (SAM) treatment (red one) on a glass substrate, c) represents the ink-jet printing of the inventive composition i) (optional afterwards post bake step), d) represents the curing process of the droplets under UV-exposure.

In accordance with Fig. 1 the piezo-actuated ink-jet printer head consists of a pressure chamber including an ink inlet and an outlet passage terminated in an orifice. The piezo-actuator is used to deform the chamber in order to generate a pressure wave inside the chamber, which ejects a certain amount of the composition from the orifice to form the droplet. Depending on the deformation mode of the piezoelectric element, the technology can be classified into four main types: bend, push, shear and squeeze mode. A squeeze-mode ink-jet can be designed with a piezoelectric ceramic tube surrounding a glass capillary-nozzle system, such as the Microdrop Dispenser Head, or with a piezoelectric ceramic tube cast in plastic that encloses the ink channel.

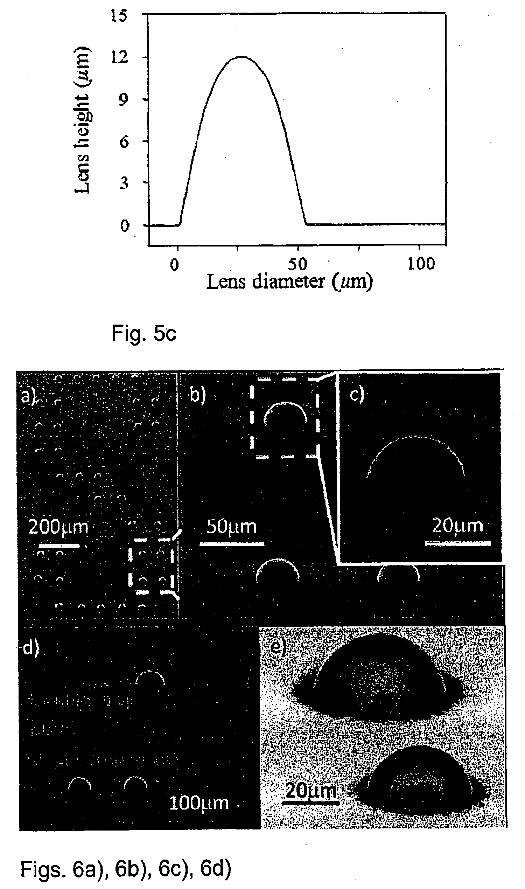

When it is desired to have a droplet expelled from the orifice and, thus, deposited on the surface of the substrate, a short rise time voltage pulse is applied to the transducer generating an acoustic pressure wave inside the capillary, which causes a small amount of the composition to be expelled from the orifice. Accordingly, a column of the composition will be ejected and will break up into one, two or more droplets in case the kinetic energy is sufficient to overcome the surface energies and viscous dissipation forming the the stable single, double or more droplet pixel on the surface of the substrate (see Fig. 6 d) and e)).

The process is repeated for the deposition of every separate droplet on the substrate. In a preferred embodiment of the invention a computer-controlled x-y-θ stage allows i) the positioning of the substrate with respect to the impact location or ii) the positioning of the ink-jet printhead with respect to the substrate (see Fig. 1).

In accordance with the present invention commercial piezo-actuated ink-jet printers are preferably used.

The process described above for piezo-actuated ink-jet printers is governed by two phenomena: (1) the propagation of the pressure wave along the capillary tube and (2) the conversion of the kinetic energy of the liquid jet into surface energy. Both phenomena can be characterized by dimensionless numbers, namely the Ohnesorge number (Oh), the Z-number (Z) and the Weber number (*We*) that allow predicting whether a droplet is ejected in the first place, and second if it is free of satellite droplets. We describes the kinetic-surface energy conversion governed by both the speed of the jet and the surface tension. *Oh* characterizes the propagation of the pressure wave and its attenuation by viscous dissipation. Z is simply defined by $Z=Oh^{-1}$

In order to generate a droplet, two conditions should be typically fulfilled: First the kinetic energy should be higher than the surface energy of the droplet. This is correlated with We:

$$We = \text{Kinetic Energy/Surface Energy} = dv^2\rho\sigma^{-1} \qquad \text{Equation 1}$$

where $d$ is the droplet diameter, $v$ is its velocity, $p$ is the liquid's density and $\sigma$ is the surface tension of the liquid. The second condition is that the kinetic energy should be higher than the viscous dissipation. This is described by the Reynolds number:

$$Re = \text{Kinetic Energy/Dissipated Energy} \qquad \text{Equation 2}$$

*Oh* combines these two conditions:

$$Oh = \sqrt{We}\Big/Re = \frac{\mu}{\sqrt{\rho\cdot\sigma\cdot d}} \qquad \text{Equation 3}$$

where $\mu$ is the dynamic viscosity of the liquid. Typically, *We* should typically be large enough and *Oh* should typically be small enough to generate a droplet. As categorized by Pilch and

Erdman (G.O. Thomas, Atomization and Sprays 13 (1), 117-129 (2003)), typically no breakup occurs when *We* is smaller than a critical value.

For instance, the critical value of *We* of water is close to 12. For *We* < 12 typically no breakup occurs whereas for 12 < *We* < 18, vibration behavior dominates and the flow enhances the amplitude of droplet oscillation to produce a few satellites.

As predicted by Fromm (Fromm, J.E., IBM Journal of Research and Development, 1984. 28(3): p. 322-333) and later by Derby and Reis (Reis, N., C. Ainsley, and B. Derby, Journal of Applied Physics, 2005. 97(9): p. 094903-6), DOD mode ink-jet printing typically takes place in the range of 1 < Z < 10. At Z = 10 or higher, satellite-drops are typically formed.

However, the practical observations of the inventors are not fully in line with the predictions of the dimensionless analyses as set out before. For instance, the inventors have successfully generated droplets of the inventive composition ii), in particular EPON™ SU-8, with velocities smaller than the critical velocities predicted by the model. This shows that the viscous micro-droplets generated using the acoustic propagation of pressure waves in a glass capillary are not formed by the Plateau-Rayleigh instability, but it is more likely that a discontinuous energy supply causes their formation. The underlying physics of this phenomenon and the simulation of the liquid's meniscus behavior inside and outside of the capillary are presently not fully understood and are currently further investigated.

Nevertheless, on the basis of the dimensionless analyses as set out hereinbefore, at least predictions can be made to determine the conditions, which should be met to inventively produce micro optical articles.

Besides, the material properties of the inventive composition, such as the (dynamic) viscosity, the surface tension and the density, the ink-jet printer parameters, such as the diameter of the nozzle, the temperature of the composition in the nozzle, the pressure inside the capillary, and the droplet velocity have furthermore an impact on the feasibility of droplet generation and its stability. The amplitude and the length of the signal sent to the piezo-actuator as well as the nozzle temperature can be computer controlled to influence the amount of kinetic energy provided to the liquid.

For example, it has been shown (see Example 4) that in some cases, by increasing the nozzle temperature, it is possible to reduce the viscosity and to decrease the viscous dissipations. For instance, for an epoxy-based polymer solution the preferred depositing temperature range is between 30°C - 90°C, more preferably 60°C - 80°C.

In a preferred embodiment of the inventive process the droplets can be observed via a stroboscopic vision system, when the generating signal amplitude and its pulse length are tuned.

In a further preferred embodiment of the inventive process the depositing step b) can be carried out either in a continuous mode or in a drop-on-demand mode. The drop-on-demand mode is in particular preferred when i) predefined arbitrary patterns need to be printed or ii) droplets shall be printed on a pre-structured substrate.

In accordance with the present invention composition i) comprises conventionally applicable organic-inorganic hybridpolymers, namely the organic-inorganic hybridpolymer of the inventive composition i) comprises or consists of one or more (meth) acrylate-based organic units connected to an inorganic Si-O-Si- network, e.g. ORganically Modified CERamics (ORMOCER®, Frauenhofer Institute for Silicate Research (ISC), Würzburg, Germany).

ORMOCER®s as the preferred organic-inorganic hybridpolymers to be used in accordance with the present invention are typically produced via a sol-gel process, wherein the starting materials are typically condensed to polymers under decomposition of alcohol (see, *e.g.,* M. Robertson et al., International Microelectronics and Packaging Society -IMAPS-: 13th European Microelectronics and Packaging Conference & Exhibition, 30.5.-1.6. 2001. Strasbourg, France).

The inorganic Si-O-Si- network of the preferred organic-inorganic hybridpolymers (ORMOCER®s) are preferably formed by one or more, the same or different starting materials comprising an Si-O unit (A), preferably selected from the group consisting of $-Si(OR^1)_3$, or $-Si(OR^1)_2R^1$, wherein $R^1$ represents independently from each other hydrogen or optionally substituted $C_1$ to $C_{10}$ alkyl, preferably methyl, ethyl, propyl, isopropyl, n-butyl, i-butyl, *tert.*-butyl, n-pentyl, and 2-pentyl, more preferably methyl or ethyl.

Furthermore, the preferred starting materials comprise or consist of one, two, three or more acrylate or methacrylate units (B) connected *via* a connecting unit (C) to the Si-O unit (A).

In a preferred embodiment of the present invention the connecting unit (C) is selected from the group consisting of optionally substituted $-(C_1$ to $C_{10}$ alkylen)-, or $-(C_1$ to $C_{10}$ alkylen)-A-$(C_1$ to $C_{10}$ alkylen)-A-$(C_1$ to $C_{10}$ alkylen)-, wherein A is represented by -O-, -S-, -CO-O- and wherein $C_1$ to $C_{10}$ alkylen typically represents straight or branched $C_1$ to $C_{10}$ alkylen, preferably methylen, ethylen, propylen, isopropylen, n-butylen, 2-butylen, 2,2-(dimethylen)butyl, n-pentylen, 2-pentylen, 3-pentylen, or 2,2-(dimethylen)pentyl.

In addition to the preferred starting material as set out hereinbefore one or more, the same or different of the following compounds can be added to the sol-gel process to produce the preferred organic-inorganic hybridpolymer of the inventive composition i): $Si(OR^2)_2(Aryl)_2$, $Si(OR^2)_3R^2$, or $Si(OR^2)_2(R^2)_2$, wherein $R^2$ represents independently from each other hydrogen or optionally substituted $C_1$ to $C_5$ alkyl, preferably methyl, ethyl, propyl, isopropyl, n-butyl, ibutyl, *tert.*-butyl, n-pentyl, and 2-pentyl, more preferably methyl, ethyl or propyl and wherein Aryl represents independently from each other optionally substituted phenyl. In a furthermore preferred embodiment $R^2$ represents hydrogen in $Si(OR^2)_2(Aryl)_2$.

In the context of the present invention the term "optionally substituted $C_1$ to $C_{10}$ alkyl" or "optionally substituted $C_1$ to $C_{10}$ alkylen" means that one or more of the hydrogens at one or more of the carbon atoms are independently from each other replaced by a halogenide, preferably fluoride, chloride, and/or iodide, more preferably fluoride, or an epoxy-function.

In the context of the present invention the term "optionally substituted aryl" or "optionally substituted phenyl" means that one or more of the hydrogens at one or more of the carbon atoms are independently from each other replaced by a halogenide, preferably fluoride, chloride, and/or iodide, more preferably fluoride.

In a furthermore preferred embodiment of the present invention the starting material does not comprise glycidyloxypropyltrimethoxysilane (CAS No.: 2530-83-8).

The total amount of the organic-inorganic hybridpolymer in the inventive composition i) is preferably in the range between 1 to 90 wt.-%, preferably 20 to 80 wt.-%, more preferably 30 to 70 wt.-% and most preferably 40 to 60 wt.-% based on the total amount of the composition i).

According to the present invention, one or more conventional polymerization starters, preferably one, can be used for composition i), which enable the polymerization of polymeric composition i) during the curing step c) of the inventive method. Conventional polymerization starters for composition i) are radical formers and can be selected from the group consisting of thermal initiators or photo initiators, preferably UV photo initiators. With respect to the present invention photo initiators are preferably used as the polymerization starter. In a preferred embodiment the photo initiator for composition i) is selected from the group consisting of $\alpha$-hydroxyketone and $\alpha$-aminoketones or photo initiators with equivalent properties, preferably $\alpha$-aminoketones and most preferred 2-benzyl-2-(dimethylamino)-1-[4-(4-morpholinyl)phenyl]-1-butanone (IRGACURE® 369) and diphenyl(2,4,6-trimethylbenzoyl)phosphine oxide (DAROCUR® TPO). The total amount of the photo initiator in the inventive composition i) is in the range between 0,1 to 2 wt.-%, preferably 0,3 to 1,5 wt.-%, more preferred 0,5 to 1 wt.-% based on the weight of the organic-inorganic polymer in composition i).

According to the present invention, one or more conventional reactive diluents, preferably one, can be used in composition i). In a preferred embodiment the reactive diluent for composition i) is selected from the group consisting of mono or multifunctional aliphatic, cycloaliphatic and aromatic acrylate or methacrylate monomers, more preferred are aliphatic mono or difunctional acrylic acid ester or methacrylic acid ester, most preferred with $C_1$ to $C_5$ alkyl, such as methacrylic acid methylester, methacrylic acid butylester, ethyleneglycol diacrylate, ethyleneglycol dimethacrylate, 1,3-butyleneglycol diacrylate, 1,3-butyleneglycol methacrylate, 1.4-cyclohexanediolv diacrylate, 1.4-cyclohexanediol methacrylate, diethyleneglycol dimethacrylate and/or diethyleneglycol diacrylate. The total amount of the reactive diluent in the inventive composition i) is preferably in the range of 0 to 99 wt.-%, preferably 0 to 80 wt.-%, more preferably 10 to 70 and most preferably 20 to 60 wt.-% based on the total weight of composition i).

According to the present invention, the inventive composition ii) comprises one or more conventionally applicable epoxy resins, namely the epoxy resin is based on phenol, e.g. novolac. According to the state of the art, novolac is typically reacted with epichlorohydrin or $\beta$-methylepichlorohydrin under basic conditions or in the presence of an acid catalyst with subsequent basic conditions. In a further preferred embodiment the epoxy resin is selected from the group consisting of epoxy resins based on bisphenol-A, bisphenol-A-diglycidylester and/or cresol. In a furthermore preferred embodiment composition ii) comprises epoxy resins based on one or more multifunctional bisphenol-A-novolacs, oligomers based on bisphenol diglycidylether or any mixture thereof. A particular preferred epoxy resin according to the present invention is EPON™ Resin SU-8, a negative, polymeric solid epoxy-type novolac resin (near UV photoresist, 365 nm) possessing an average epoxy group functionality of approximately eight. EPON™ SU-8 is compatible with bisphenol A-based epoxy resins, imparting improved high temperature strength, thermal stability, reactivity and chemical resistance.

In case the inventive composition ii) comprises two or more different epoxy resins in admixture, the optical, thermal and/or mechanical properties of the formed micro optical article can be advantageously tuned.

The total amount of the epoxy resin in the inventive composition ii) is preferably in the range between 1 to 90 wt.-%, preferably 20 to 80 wt.-%, more preferably 30 to 70 wt.-% and most preferably 40 to 60 wt.-% based on the total amount of the composition ii).

According to the present invention, one or more conventional polymerization starters, preferably one, can be used in composition ii), which enables the polymerization of the epoxy resin composition ii) during the curing step c) of the inventive method. Conventional polymerization starters can be selected from the group consisting of thermal initiators or photo initiators, preferably UV photo initiators. With respect to the present invention photo initiators are preferably used as the polymerization starter. Conventional photo initiators suitable for composition ii) of the present invention are compounds which decompose under UV light into strong Lewis Acids suitable for cationic polymerization and which allow, optionally in combination with additional sensitizers, activation of composition ii) in the desired wave length range. In a preferred embodiment photo initiators for composition ii) are selected from the following group of salts: diazonium, phosphonium, sulfonium and/or iodonium salts. Most preferred are photo initiators for composition ii) selected from the group consisting of mixed arylsulfonium hexafluoroantimonate salts, e.g. Cyracure® 6976, and mixed arylsulfonium hexafluorophosphate salts, e.g. Cyracure® 6992. The total amount of the photo initiator in the inventive composition ii) is preferably in the range between 0,05 to 5 wt.-% based on the weight of the epoxy resin in the inventive composition ii).

According to the present invention, one or more conventional reactive diluents, preferably one, are used for the inventive composition ii). In a preferred embodiment the reactive diluent for composition ii) is selected from the group consisting of multifunctional epoxy group containing monomers, e.g. 3.4-epoxycyclohexylcarbonicacid-(3.4-epoxycyclohexylmethylester) (EEP), cyclohexyldimethyldiglycidylether, glyceroldiglycidylether, butanedioldiglycidylether and/or ethylenglycoldiglycidylether. The total amount of the reactive diluent in the inventive composition ii) is preferably in the range of 50 to 200 wt.-%, preferably, 50 to 150 wt.-% based on the total weight of the epoxy resin.

According to the present invention, one or more conventional inert solvents, preferably one, can be used for the inventive composition ii) or composition i) or ii) to be provided in the inventive proess of producing a microoptical article, wherein the one or more solvent is/are selected from the group consisting of γ-butyrolactone (GBL), preferably high purity GBL, cyclopentanone, heptanone, propylenglycolmonomethyletheracetate and methylisobutylketone. Concerning the inventive composition i) (high purity) γ-butyrolactone (GBL) is used as inert solvent. Most preferred is (high purity) γ-butyrolactone (GBL). The total amount of the reactive diluent in the inventive composition i) is preferably in the range of 0 to 99 wt.-%, preferably 0 to 80 wt.-%, more preferably 10 to 70 and most preferably 20 to 60 wt.-% based on the total weight of composition i).

In a furthermore preferred embodiment of the invention, the inventive composition i) or ii) further comprises or consists of one or more, the same or different nanoparticles, preferably different nanoparticles with a particle size in the range between 1 to 100 nm, preferably 5 to 50 nm, more preferably 10 to 30 nm. According to the present invention conventional nanoparticles for optics can be applied. Preferably the nanoparticles are selected from the group consisting of $SiO_2$, ZnS and $TiO_2$. Nanoparticles allow further adjustment, in particular of the optical properties, e.g. refractive indexes, of the produced micro optical articles as desired. The total amount of the nanoparticles in the inventive composition i) or ii) is in the range between 0 to 50 wt.-%, preferably 5 to 30 wt.-%, more preferably 10 to 20 wt.-% based on the total weight of the organic-inorganic hybridpolymer in the inventive composition i) or the epoxy resin in the inventive composition ii).

According to the present invention, the inventive composition i) or ii) comprises preferably a dynamic viscosity ($\mu$)

$$\mu = \rho \cdot v$$

where $\rho$ is the density of the inventive composition and $v$ is the kinematic viscosity of the inventive composition i) or ii), in the range of 1 to 500 mPas.

The dynamic viscosity can typically be decreased by increasing the temperature of the inventive composition i) or ii) and/or the nozzle.

In a preferred embodiment, where a piezo-actuated ink-jet printer is used, the dynamic viscosity of composition i) or ii) is preferably in the range of 1 to 200 mPas, more preferably, 2 to 100 mPas, even more preferred 3 to 50 mPas and most preferred 5 to 20 mPas.

The preferred embodiments of the inventive composition i) or ii) as set out hereinbefore can be combined with each other, provided that the combination is reasonable. A person skilled in the art will readily understand which combinations are reasonable.

In accordance with the present invention, conventional substrates can be used in step b) of the inventive process, which allow depositing and curing of droplets of the inventive composition i) or ii). Preferably, the substrate is selected from the group consisting of optionally functionalized inorganic glass, Silicon (Si) wafers, metalized wafers, quartz, black Si, and polymers. Due to the properties of the inventive composition i) or ii) the substrate cannot only be solid, but also be flexible, i.e., stretchable and/or bendable polymers. Flexible polymer substrates are preferred for new applications, e.g., for flexible micro optical displays or photovoltaic devices, such as solar cells, on flexible polymers. In a preferred embodiment the inventive composition i) will be used for flexible polymer substrates due to advantageous properties.

The geometry and, thus, the optical properties of the inventively obtainable micro optical articles can furthermore be tuned as desired by amending the surface of the substrate. E.g., by reducing the hydrophilicity of the substrate surface, the contact angle between the inventive composition i) or ii) and the substrate surface will typically be increased and, accordingly, the diameter of the droplet will be reduced, leading to an increased resolution of the produced micro optical article. The hydrophilicity of the substrate surface can be reduced with conventional methods, preferably by functionalizing the surface with self assembled monolayers (SAM), more preferably with trichloro(1H, 1H, 2H, 2H-perfluorooctyl)silane optionally in combination with octyldecyltrimethoxysilane.

Accordingly, conventional substrates to be used in accordance with the present invention can be selected from the following group: quartz, glass, trichloro(*1H, 1H, 2H, 2H-perfluorooctyl)*silane functionalized quartz, SAM of trichloro(*1H, 1H, 2H, 2H-perfluorooctyl)*silane functionalized Si, SAM of trichloro(*1H, 1H, 2H, 2H-perfluorooctyl)*silane functionalized glass, Teflon 30S, Teflon 60S, Teflon 90S, Teflon 120S, black Si.

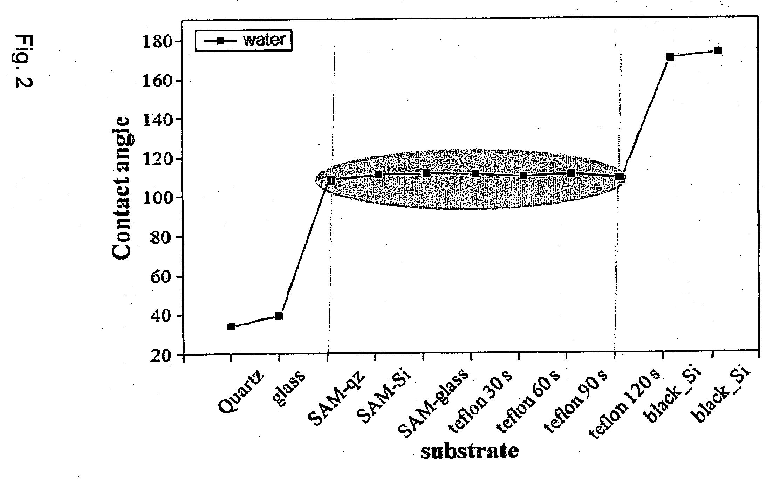

In Fig. 2 contact angles of droplets of water on various substrate surfaces are shown in a diagram. It follows that the water contact angle typically increases with respect to the order of the surfaces of substrate materials selected from the group consisting of quartz, glass, trichloro(*1H, 1H, 2H, 2H-perfluorooctyl)*silane functionalized quartz, SAM of trichloro(*1H, 1H, 2H, 2H-perfluorooctyl)*silane functionalized Si, SAM of trichloro(*1H, 1H, 2H, 2H-perfluorooctyl)*silane functionalized glass, Teflon 30S, Teflon 60S, Teflon 90S, Teflon 120S, black Si.

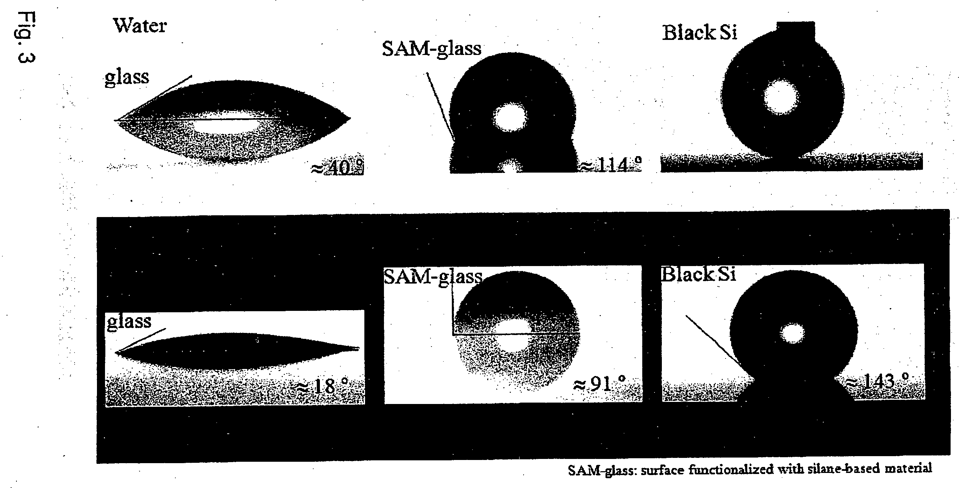

In Fig. 3 a comparison of optical microscopic images (optical microscopic images have been taken by Nikon Eclipse L200) of contact angles of respective droplets of water or an inventive composition i) on glass, SAM glass and black Si are shown. If follows from Fig. 3 that the contact angle of droplets of the inventive composition i) are reduced in comparison with contact angles of water droplets, however, the contact angles of droplets of the inventive composition i) also increase with the order of glass, SAM glass and black Si.

In a furthermore preferred embodiment, the substrate in step b) of the inventive process comprises one or more, the same or different coupling devices onto which the inventive composition i) or ii) will be deposited. Such coupling devices will preferably be the selected from the group consisting of devices of fiber optics, diodes, more preferably light emitting diodes or laser diodes, photodetectors, more preferably solid state photodetectors, integrated optical couplers or decouplers.

Accordingly, micro optical articles, preferably micro optical lens or micro optical lens array, coupled to above identified coupling devices are preferred embodiments of the inventively obtainable micro optical articles.

In case different coupling devices are deposited on the surface of the substrate, which require different ink-jet printer head settings, a drop-on-demand mode is preferably used, as different settings can easily be adjusted for the deposition of the droplets at different position points.

In a furthermore preferred embodiment, the inventive composition i) or ii) can prior to step b) be filtrated to remove non-dissolved components or aggregates of nano-particles. In addition or alternatively thereto the one or more separately positioned droplets in step b) of the inventive process can prior to step c) of the inventive process be preferably heat-treated for removing part of or all of the solvent.

In a furthermore preferred embodiment, the inventive process produces out of one droplet a micro optical lens. In a preferred embodiment more than one droplet of the inventive composition i) or ii) are deposited onto the surface of the substrate in step b) of the inventive process so that a micro optical lens array is produced. The production of a micro optical lens array furthermore reduces the production costs and time.

According to the second aspect of the invention a micro optical article is obtainable by the inventive process of claim 1, including the preferred embodiments of the inventive composition i) or ii) and the substrates as described hereinbefore.

The micro optical article, preferably a micro optical lens or a lens of a micro optical lens array according to the present invention will typically have a diameter and a height in the micron range. Preferably the diameter is in the range from 1 to 500 $\mu$m, more preferably 10 to 200 $\mu$m, even more preferred 20 to 100 $\mu$m. The height is preferably in the range from 1 to 200 $\mu$m, more preferred 2 to 100 $\mu$m, even more preferred 5 to 50 $\mu$m and is preferably smaller than the diameter. A reduction of the diameter of the inventive micro optical article, preferably micro optical lens or micro optical lens array, can in addition or alternatively to functionalizing the substrate as set out hereinbefore typically be adjusted by the use of different nozzle diameters.

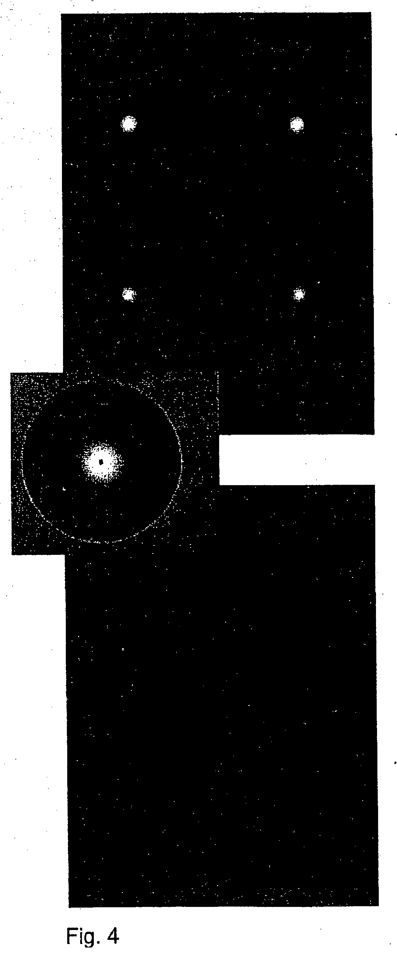

Fig. 4 shows optical microscopic images (optical microscopic images have been taken by Nikon Eclipse L200) of part of a 30 x 30 inventive micro optical lens array ink-jet printed with only one droplet per lens using an inventive composition i) (ORMOCORE®). The measured micro optical lens diameter is ~ 53 $\mu$m and the height is ~ 12 $\mu$m.

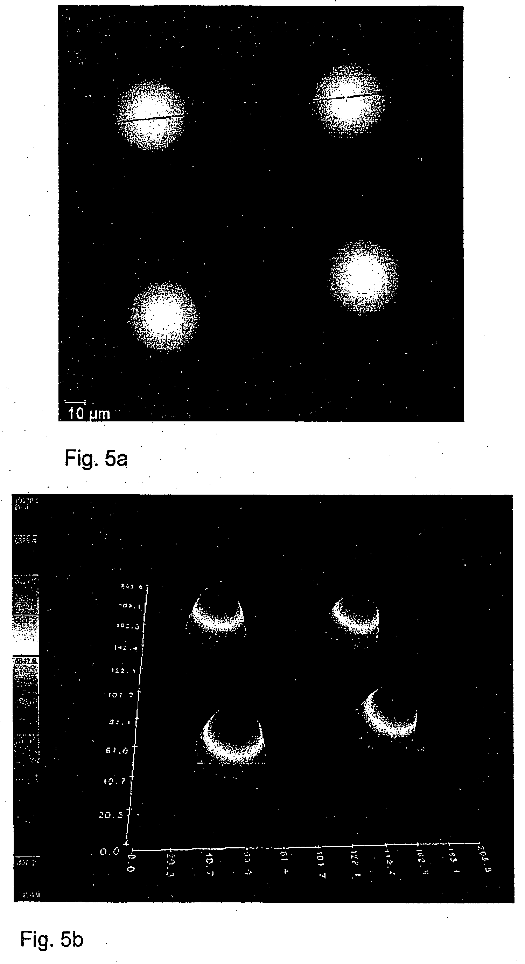

Figs. 5a) b) and c) show measurements of micro optical lenses (diameter 50 $\mu$m, maximal height 11 $\mu$m) comprising the inventive composition i) observed in transmission (digital holoscopic microscopy images have been taken by DHM™ T1000). Fig. 5 a) shows the unwrapped phase image and Fig. 5 b) the 3D perspective image. The profile extracted from the part of the lens array is presented in Fig. 5 c). Results obtained in Fig. 5 enable the estimation of the micro optical lens shape, in particular the diameter and the height.

Figs. 6 a), b), c), d) and e) show Scanning Electron Microscopy (SEM) images (Scanning Electron Microscopy (SEM) has been taken by Zeiss LEO 1550 scanning electron microscope) of single or double droplet pixels of an inventive composition ii) (EPON™ SU-8) on (SAM-coated) Si.

A computer-controlled x-y-θ stage allowed the positioning of a substrate with respect to the impact location of the droplets so that the letter "S" could be printed with the inventive process (see Fig. 6a). It followed that the final size of a droplet of the inventive composition ii), preferably EPON™ SU-8, and, thus, the inventive micro optical article, could be reduced by up to 50% in radius when the surfaces of the substrates were functionalized, e.g. by a self-assembled monolayer (SAM). In the case of a trichloro(*1H,1H,2H,2H*-perfluorooctyl)silane SAM, the mean radius value was reduced from 58.5 $\mu$m for non-treated silicon to 28.9 $\mu$m for SAM-coated silicon. Thus, the shape and size of the final pattern could be controlled to a large extent. The It 3D shape of the deposited droplet can also be modified by changing the contact angle using different substrates or modified surfaces.

Fig. 6 a), b), c), d) and e) show EPON™ SU-8 predefined patterns printed in DOD mode. In this mode single or double droplet pixels can be ejected individually at due times and positions. Furthermore, the alignment of the nozzle to pre-structured substrates is feasible in this mode. After deposition, the droplets were pre-baked (100°C, 15 minutes), UV-exposed ($400mJ/cm2$) and post-baked (100°C, 60 minutes). The scanning electron microscopy (SEM) images of the droplets clearly show the particular 3D shape of the deposited drops and their highly reproducible curvature which can be tuned using different substrates.

The inventive micro optical article can typically be applied in micro displays for consumer goods, imaging sensors, diodes, photodetectors and photovoltaic devices. Accordingly, in a preferred embodiment the inventively obtainable micro optical article is used in micro optical displays, for optical couplings with fiber optics, collecting light emitted from a light emitting diode or a laser diode, focusing light on photodetectors, preferably solid state photodetectors, or is used as an integrated optical coupler or decoupler and as an optical lens.

In an alternative preferred embodiment the inventively obtainable micro optical article can be used as a molding structure to form a negative or a positive therefrom.

According to the fourth aspect of the present invention the use of the inventive composition i) or ii) also comprises the use of the preferred embodiments of the inventive composition i) or ii) in the production of a micro optical article using an ink-jet printer. The preferred embodiments of the inventive composition i) or ii), the substrate, and the inventive process as described hereinbefore can also be applied to the fourth aspect of the invention.

According to the fifth aspect of the invention the use of the inventive micro optical article in optics or opto-electronics also comprises the use of preferred embodiments of the inventive micro optical articles, inventive composition i) or ii), substrates and the inventive process as set out hereinbefore.

In the following, the invention will be described by the use of examples. However, the scope of the claims relating to the inventive subject matter is thereby not limited.

Examples

Materials:

γ-butyrolactone (GBL) with high purity and trichloro(1H,1H,2H,2H-perfluorooctyl)silane have been purchased from Aldrich Co.

ORMOCORE® and ORMOCOMP®, both acrylate based photo-curable (UV) hybrid organic-inorganic polymers comprising photo initiators have been provided by micro resist technology, Gesellschaft für chemische Materialien spezieller Photoresistsysteme mbH. ORMOCORE® comprises diphenyl(2,4,6-trimethylbenzoal)-phosphine oxide and ORMOCOMP® comprises 2-benzyl-2(dimethylamino)-1-[4-(4-morpholinyl)phenyl]-1-butanone as the photo initiator.

ORMOCORE® and ORMOCOMP® are optically transparent over the wavelength range from 400 to 1600 nm and have the following technical data:

|  | ORMOCORE® | ORMOCOMP® |
|---|---|---|
| Thermal stability | weight loss < 5 % up to 270 °C ($5\,K^{min-1}$) | |
| Film quantity | good planarization properties | |
| Thermal behavior | duromeric | |
| Water absorption | < 0,5 % | |
| CTE (20 -100 °C) | 100 - 130 ppm $K^{-1}$ | |
| rms roughness | 2 -4 nm | |
| Shrinkage (during UV curing) | 2-5Vol.% | 5-7 Vol.% |
| Refractive index at 635 nm | 1.553 | 1.518 |

EPON™ Resin SU-8 has been provided by micro resist technology, Gesellschaft für chemische Materialien spezieller Photoresistsysteme mbH.

The micro cover glass plates (area 20 x 20 $mm^2$, thickness: 0,1 mm) have been purchased from Menzel-Glaser (Geneva, Switzerland).

Example 1: Micro lens comprising organic-inorganic hybridpolymer photoinitiator and inert solvent

The inventive composition was formed by diluting 50 g of ORMOCOMP® in 20 g of high purity γ-butyrolactone.

As the substrate a glass plate was provided, which was treated with a self assembled monolayer (SAM) of an alkylsilane as described in the following: First, the surfaces of the glass plate were cleaned for 15 minutes using $O_2$-plasma (Ushio Electric, Model UER20-172V, Tokyo, Japan) before the alkylsilane SAM was formed on the surface. The $O_2$-plasma was applied to decompose any organic molecules that may have contaminated the surface as well as to create oxygen radicals. The complete removal of any organic material was confirmed by the observed decrease in the water contact angle, with the value of 0° being indicative for a fully hydrophilic surface. The cleaned glass substrate was placed in a small glass chamber containing 1 mL of trichloro(*1H, 1H, 2H, 2H-perfluorooctyl*)silane and then this small chamber has been placed for 2 hours in a hot oven (= at 170 °C) to undergro the coupling reaction to form the self assembled monolayer (SAM). The hydrophobilized glass substrate was then rinsed with soap, deionized (DI) water and isopropanol followed by drying with $N_2$ gas.

After the inventive composition was filtrated, it has been transferred to a piezo-actuated ink-jet printer (purchased from microdrop Technologies, Germany), wherein the nozzle was heatable and had a diameter of 50 μm to print micro lenses with a single-droplet per lens on the surface of the SAM coated glass substrate. A stroboscopic vision system has been used to observe the generating drops when tuning the generating signal amplitude and pulse length. The pressure in the ink-jet nozzle can be controlled to optimize liquid flow and ejecting properties. The SAM coated glass is positioned on the motorized x-y-θ (1 μm accuracy) stage, which can be controlled by a computer program. This computer-controlled x-y-θ stage allows positioning of the substrate with respect to the print head.

After positioning of the droplets on the surface of the SAM coated glass substrate, the solvent was removed by a heating step. Next the polymer composition cross-linking (curing) was initiated by UV-exposure (400mJ/cm$^2$). After a post bake step, wherein the micro lens array has been heat treated up to 140 °C, the refractive index of the produced micro optical lens was measured to be $n_D^{25}$ = 1.538 at 635 nm.

Example 2: Micro lens comprising organic-inorganic hybridpolymer, photoinitiator, inert solvent and reactive diluent

The inventive composition was formed by diluting 50 g of ORMOCOMP® in 15 g of high purity γ-butyrolactone and 10 g ethylenglycoldimethacrylate.

The inventive composition has then been ink-jet printed and further treated according to the conditions described in Example 1.

The refractive index of the produced micro optical lens was measured to be $n_D^{25}$ = 1.521 at 635 nm.

Example 3: Micro lens comprising organic-inorganic hybridpolymer, photoinitiator, inert solvent and nanoparticles

The inventive composition was formed by diluting 50 g of ORMOCOMP® in 30 g of high purity γ-butyrolactone and 6 g $SiO_2$ nanoparticles (particle size 20 nm).

The inventive composition has then be printed and further treated according to the conditions described in Example 1. The refractive index index of the produced micro optical lens was measured to be $n_D^{25}$ = 1.521 at 635 nm.

Example 4: Experiments to stability and reproducibility for ink-jet printing with various concen-trations of ORMOCORE® in GBL using 50 μm nozzle diameter

The inventive compositions were formed by diluting ORMOCORE® and γ-butyrolactone (GBL) according to the method as described in Example 1, wherein the following wt.-% ratios, as shown in Table 1, were used:

Table 1:

| ORMOCORE® wt.% | GBL wt.-% |
|---|---|
| 80 | 20 |
| 60 | 40 |
| 40 | 60 |

In addition a comparative composition comprising 100 wt.-% ORMOCORE® was also provided.

The three inventive compositions as well as the comparative composition have subsequently been ink-jet-printed onto the surface of the glass plate at room temperature and at 50 °C using the piezo-actuated ink-jet printer of Example 1 in the continuous mode (CONT) and the drop-on-demand mode (DOD).

The stability and the reproducibility of the droplets ink-jet-printed with the piezo-actuated ink-jet-printer having a heatable nozzle with a diameter of 50 $\mu$m have been monitored with a stroboscopic vision system and the results are summarized in Table 2.

Table 2

| wt.-% | | | at 50 °C | | | at room temp. | |
|---|---|---|---|---|---|---|---|
| ORMOCORE® | GBL | | CONT | DOD | | CONT | DOD |
| 100 | 0 | | + | - | | - | - |
| 80 | 20 | | + | - | | - | - |
| 60 | 40 | | ++ | + | | - | - |
| 40 | 60 | | +++ | +++ | | +++ | +++ |

CONT: inkjet printing in continuous mode.
DOD: inkjet printing in drop-on-demand mode.
- No stable droplet have been generated.
+ Stable drops have been generated, but are not reproducible.
++ Reproducible stable droplets have been generated, but the generation is very sensitive to the evaporation of the solvent and the pressure.
+++ Reproducible stable droplets have been generated.

The results show, that ink-jet printing with a piezo-actuated ink-jet printer having a 50 $\mu$m diameter nozzle generates reproducible stable drops both at room temperature and at 50°C and in both the continuous mode and the drop-on-demand mode for an inventive composition i) comprising 40 wt.-% ORMOCORE® in GBL.

When increasing the amount of ORMOCORE® in GBL the ability to generate reproducible drops decreases at both room temperature and 50°C and in both the continuous mode and the drop-on-demand mode.

Example 5: Experiments to increase resolution by functionalizing the surface of the substrate for composition comprising 40 wt.% ORMOCORE® in GBL

The composition comprising 40 wt.% ORMOCORE® in GBL prepared according to Example 4 has been ink-jet-printed according to the conditions described in Example 1 on various surfaces of substrates, namely an untreated glass surface, a SAM coated glass surface as prepared in Example 1 and black Si surface.

Water contact angle measurements: All substrates were cleaned with acetone prior to contact angle measurement. The contact angles were determined by the static pendent drop method (Digidrop contact angle meter, GBX Instrumentation Scientifique, Romans, France) using ultra pure water and ORMOCORE® as reference fluid and ink. In this method, a droplet of water and inks were carefully placed on a substrate and photographed. In any case, the resulting contact angle was taken as the mean value for at least three individual measurements.

Thus, it has been found that the contact angles of the generated droplets of the inventive composition of 40 wt.-% ORMOCORE® in GBL increase from 18° for the untreated glass surface to ˷ 91° for the SAM coated glass surface and to ~ 143° for the surface of black Si (see Fig. 3).

With an increase of the contact angle the diameter of the generated droplets on the various surfaces decreased and, accordingly, the resolution of the generated micro lenses also increases.

Example 6: Micro lens comprising epoxy resin, photoinitiator, inert solvent and reactive diluent

The inventive composition was formed by admixing 8 g of epoxy based novolac EPON™ SU-8, 10 wt.-% Cyracure® 6976 based on the epoxy equivalent, 10 g 3.4-epoxycyclohexylcarbonicacid-(3.4-epoxycyclohexylmethylester) and as much of high purity $\gamma$-butyrolactone to produce a solution with a dynamic viscosity of 11 mPas.

The inventive composition has then been printed under the conditions of Example 1 on a glass substrate, which in contrast to Example 1 was not coated.

After positioning of the droplets on the surface of a glass substrate, the solvent was removed by a heating step. In the following the composition of the droplets has been polymerized by UV light (350mJ/cm$^2$, 2 minutes). In a post bake step, the micro lenses have been heat treated up to 140 °C.

The produced micro lenses showed a diameter of 80 to 90 $\mu$m. The refractive index of the produced micro optical lens was measured to be $n_D^{25}$ = 1.564 at 635 nm.

**Claims**

1. Process of producing one or more separate micro optical articles fusing an ink-jet printer, wherein the process comprises or consists of the following steps:

   a) providing an ink-jet suitable composition comprising or consisting of

   i. an organic-inorganic hybridpolymer and a polymerization starter together with an inert solvent,

   - wherein the organic-inorganic hybridpolymer comprises or consists of one or more (meth) acrylate-based organic units connected to an inorganic Si-O-Si-network,
   - wherein the polymerization starter is/are one or more polymerization starters selected from the group of photo initiators, and
   - wherein the inert solvent is/are one or more inert solvents selected from the group consisting of gamma-butyrolactone, cyclopentanone, heptanone, propylenglycolmonomethyletheracetate and methylisobutylketone, or

   ii. an epoxy resin, a polymerization starter and an inert solvent together with a reactive diluent,

   - wherein the epoxy resin comprises or consists of one or more epoxy resins based on phenol,
   - wherein the polymerization starter is/are one or more polymerization starters selected from the group of photo initiators,
   - wherein the inert solvent is/are one or more inert solvents selected from the group consisting of gamma-butyrolactone, cyclopentanone, heptanone, propylenglycolmonomethyletheracetate and methylisobutylketone, and
   - wherein the reactive diluent is/are one or more reactive diluents selected from the group consisting of multifunctional epoxy group containing monomers,

   b) depositing one or more separate droplets of the composition of step a) onto a surface of a substrate with an ink-jet-printer, and
   c) curing the one or more separate droplets of step b) to form the one or more separate micro optical articles.

2. Process according to claim 1, wherein prior to step b) the composition of step a) is filtrated and/or prior to step c) the solvent is removed from the deposited one or more separate droplets on the surface of the substrate.

3. Process according to claim 1 or 2, wherein the droplets are deposited in step b) in a continuous mode or in a drop-on-demand mode.

4. Process according to any one of the preceding claims, wherein the substrate in step b) is solid or flexible and selected from the group consisting of optionally functionalized inorganic glasses, quartz, Si wafers, metalized Si wafers, black Si, and polymers.

5. Process according to any one of the preceding claims, wherein the substrate in step b) comprises one or more, the same or different coupling devices selected from group consisting of fiber optics, diodes, photodetectors, integrated optical couplers or decouplers onto which the droplets are deposited.

6. Micro optical article obtainable by a process according to claim 1.

7. Composition suitable for producing a micro optical article using an ink-jet printer, wherein the composition comprises or consists of the following components:

   i. an organic-inorganic hybridpolymer and a polymerization starter together with an inert solvent,

   - wherein the organic-inorganic hybridpolymer comprises or consists of one or more (meth) acrylate-based organic units connected to an inorganic Si-O-Si-network,

- wherein the polymerization starter is/are one or more polymerization starters selected from the group of photo initiators, and
- wherein the inert solvent is gamma-butyrolactone, or

ii. an epoxy resin, a polymerization starter and an inert solvent together with a reactive diluent,

- wherein the epoxy resin comprises or consists of one or more epoxy resins based on phenol,
- wherein the polymerization starter is/are one or more polymerization starters selected from the group of photo initiators,
- wherein the inert solvent is/are one or more inert solvents selected from the group consisting of gamma-butyrolactone, cyclopentanone, heptanone, propylenglycolmonomethyletheracetate and methylisobutylketone, and
- wherein the reactive diluent is/are one or more reactive diluents selected from the group consisting of multifunctional epoxy group containing monomers.

8. Composition according to claim 7, wherein the composition i) or ii) further comprises or consists of one or more, the same or different nanoparticles selected from the group of $SiO_2$, ZnS or $TiO_2$.

9. Composition according to claim 7 or 8, wherein composition i) further comprises a reactive diluent, preferably selected from the group consisting of mono or multifunctional aliphatic, cycloaliphatic and aromatic acrylate or methacrylate monomers.

10. Composition according to any one of claims 7 to 9, wherein the composition has a dynamic viscosity ($\mu$) in the range from 3 to 500 mPas.

11. Use of a composition according to any one of claims 7 to 10 in the manufacture of a micro optical article using an ink-jet printer.

12. Use of a micro optical article according to claim 6 in optics, opto-electronics or as a molding structure.

## Patentansprüche

1. Verfahren zur Herstellung ein oder mehrerer separater mikrooptischer Artikel unter Verwendung eines Tintenstrahldruckers, wobei das Verfahren folgende Schritte umfasst oder daraus besteht:

a) Bereitstellen einer tintenstrahlfähigen Zusammensetzung umfassend oder bestehend aus

i. einem organisch-anorganischen Hybridpolymer und einem Polymerisationsstarter zusammen mit einem inerten Lösungsmittel,

- wobei das organische-anorganische Hybridpolymer ein oder mehrere (Meth)acrylat basierte organische Einheiten verbunden mit einem anorganischen Si-O-Si Netzwerk umfasst oder daraus besteht,
- wobei der Polymerisationsstarter ausgewählt wird aus ein oder mehreren Polymerisationsstartern der Gruppe von Photoinitiatoren und
- wobei das inerte Lösungsmittel ausgewählt wird aus ein oder mehreren inerten Lösungsmitteln der Gruppe bestehend aus gamma-Butyrolacton, Cyclopentanon, Heptanon, Propylenglycolmonomethyletheracetat und Methylisobutylketon oder

ii. einem Epoxyharz, einem Polymerisationsstarter und einem inerten Lösungsmittel zusammen mit einem Reaktivverdünner

- wobei das Epoxyharz ein oder mehrere Epoxyharze umfasst oder daraus besteht, die auf Phenol basieren,
- wobei der Polymerisationsstarter ausgewählt wird aus ein oder mehreren Polymerisationsstartern der Gruppe von Photoinitiatoren und
- wobei das inerte Lösungsmittel ausgewählt wird aus ein oder mehreren inerten Lösungsmitteln der Gruppe bestehend aus gamma-Butyrolacton, Cyclopentanon, Heptanon, Propylenglycolmonomethyletheracetat und Methylisobutylketon und

- wobei der Reaktivverdünner ausgewählt wird aus ein oder mehreren Reaktivverdünnern der Gruppe bestehend aus multifunktionalen Epoxygruppen enthaltenden Monomeren,

b) Absetzen ein oder mehrerer separater Tropfen der Zusammensetzung aus Schritt a) auf eine Oberfläche eines Substrates mit einem Tintenstrahldrucker und

c) Aushärtung der ein oder mehreren separaten Tropfen aus Schritt b) zur Bildung der ein oder mehreren separaten mikrooptischen Artikel.

2. Verfahren gemäß Schritt 1, wobei vor Schritt b) die Zusammensetzung aus Schritt a) filtriert wird und / oder vor Schritt c) das Lösungsmittel von den abgesetzten ein oder mehreren separaten Tropfen auf der Oberfläche des Substrates entfernt wird.

3. Verfahren gemäß Schritt 1 oder 2, wobei die Tropfen in Schritt b) in einem kontinuierlichen Modus oder in einem Tropfen-auf-Bedarf (drop-on-demand) Modus abgesetzt werden.

4. Verfahren gemäß einem der vorstehenden Ansprüche, wobei das Substrat in Schritt b) starr oder flexibel ist und ausgewählt wird aus der Gruppe bestehend aus einem gegebenenfalls funktionalisierten anorganischen Glas, Quarzglas, Si-Wafer, metallisierten Wafer, schwarzen Si, und Polymer.

5. Verfahren gemäß einem der vorstehenden Ansprüche, wobei das Substrat in Schritt b) ein oder mehrere, die gleichen oder unterschiedliche Kopplungsvorrichtungen ausgewählt aus der Gruppe bestehend aus Faseroptik, Dioden, Photodetektoren, integrierte optische Koppler oder Entkoppler umfasst, auf welche die Tropfen abgesetzt werden.

6. Mikrooptischer Artikel herstellbar gemäß Anspruch 1.

7. Zusammensetzung geeignet zur Herstellung eines mikrooptischen Artikels unter Verwendung eines Tintenstrahldruckers, wobei die Zusammensetzung folgende Bestandteile umfasst oder daraus besteht:

i. ein organisch-anorganisches Hybridpolymer und ein Polymerisationsstarter zusammen mit einem inerten Lösungsmittel

- wobei das organische-anorganische Hybridpolymer ein oder mehrere (Meth)acrylat basierte organische Einheiten verbunden mit einem anorganischen Si-O-Si Netzwerk umfasst oder daraus besteht,
- wobei der Polymerisationsstarter ein oder mehrere Polymerisationsstarter aus der Gruppe von Photoinitiatoren ist oder sind und
- wobei das inerte Lösungsmittel gamma-Butyrolacton ist oder

ii. ein Epoxyharz, ein Polymerisationsstarter und ein inertes Lösungsmittel zusammen mit einem Reaktivverdünner

- wobei das Epoxyharz ein oder mehrere Epoxyharze umfasst oder daraus besteht, die auf Phenol basieren,
- wobei der Polymerisationsstarter ausgewählt wird aus ein oder mehreren Polymerisationsstartern der Gruppe von Photoinitiatoren,
- wobei das inerte Lösungsmittel ausgewählt wird aus ein oder mehreren inerten Lösungsmitteln der Gruppe bestehend aus gamma-Butyrolacton, Cyclopentanon, Heptanon, Propylenglycolmonomethyletheracetat und Methylisobutylketon und
- wobei der Reaktivverdünner ausgewählt wird aus ein oder mehreren Reaktivverdünnern der Gruppe bestehend aus multifunktionalen Epoxygruppen enthaltenden Monomeren.

8. Zusammensetzung gemäß Anspruch 7, wobei die Zusammensetzung i) oder ii) ein oder mehrere, die gleichen oder unterschiedlichen Nanopartikel ausgewählt aus der Gruppe von $SiO_2$, $ZnS$ oder $TiO_2$ umfasst.

9. Zusammensetzung gemäß Anspruch 7 oder 8, wobei die Zusammensetzung i) weiter einen Reaktivverdünner umfasst, vorzugsweise ausgewählt aus der Gruppe bestehend aus mono- oder multifunktionalen aliphatischen, cycloaliphatischen oder aromatischen Acrylat- oder Methacrylatmonomeren.

10. Zusammensetzung gemäß einem der Ansprüche 7 bis 9, wobei die Zusammensetzung eine dynamische Viskosität

(μ) im Bereich von 3 bis 500 mPas hat.

**11.** Verwendung einer Zusammensetzung gemäß einem der Ansprüche 7 bis 10 in der Herstellung eines mikrooptischen Artikels unter Verwendung eines Tintenstrahldruckers.

**12.** Verwendung eines mikrooptischen Artikels gemäß Anspruch 6 in Optik, Optoelektronik oder als eine Struktur für eine Abformung.

**Revendications**

**1.** Procédé de production d'un ou plusieurs articles micro-optiques, au moyen d'une imprimente à jet d'encre, comprenant ou consistant en les étapes suivantes :

a) fourniture d'une composition compatible jet d'encre, comprenant ou consistant en

i. un polymère hybride organique-inorganique et un initiateur de polymérisation, ainsi qu'un solvant inerte,

- ce polymère hybride organique-inorganique comprenant ou consistant en une ou plusieurs unités organiques à base de méthacrylate rattachées à un réseau Si-O-Si inorganique,
- ce composant initiateur de polymérisation consistant en un ou plusieurs composants initiateurs de polymérisation sélectionnés au sein du groupe des photoinitiateurs, et
- □□□□□□ ant inerte consistant en un ou plusieurs solvants sélectionnés au sein du groupe consistant en du gammabutyrolactone, du cyclopentanone, de l'heptanone, de l'acétate d'éthyle *propylène glycol monométhyle et de* la méthylisobutylcétone, ou

ii. une résine époxyde, un initiateur de polymérisation et un solvant inerte avec un diluant réactif,

- cette résine époxyde comprenant ou consistant en une ou plusieurs résines d'époxyde à base de phénol,
- ce composant initiateur de polymérisation consistant en un ou plusieurs composants initiateurs de polymérisation sélectionnés au sein du groupe de photoinitiateurs,
- ce solvant inerte consistant en un ou plusieurs solvants inertes sélectionnés au sein du groupe consistant en du gammabutyrolactone, du cyclopentanone, de l'heptanone, de l'acétate d'éthyle *propylène glycol monométhyle et de* la méthylisobutylcétone, et
- ce diluant réactif consistant en un ou plusieurs diluants réactifs sélectionnés au sein du groupe d'époxydes multifonctionnels contenant des monomères,

b) dépôt d'une ou plusieurs gouttes séparées de la composition de l'étape a) sur la surface d'un substrat avec une imprimante à jet d'encre, et
c) durcissement de la/les goutte(s) séparée(s) de l'étape b) pour former le/les articles micro-optiques séparés.

**2.** Procédé conforme au point 1, dans lequel, avant l'étape b), la composition de l'étape a) est filtrée et/ou avant l'étape c), le solvant est retiré de la/des goutte(s) séparée(s) déposée(s) sur la surface du substrat.

**3.** Procédé conforme au point 1 ou 2, dans lequel les gouttes sont déposées à l'étape b) en mode continu ou en mode goutte à la demande (drop-on-demand).

**4.** Procédé conforme à l'un ou plusieurs des points précédents, le substrat de l'étape b) étant solide ou souple et sélectionné au sein du groupe consistant en des verres inorganiques, du quartz, des tranches de Silicium, des tranches de Silicium métallisées, du Silicium noir et des polymères.

**5.** Procédé conforme à l'un ou plusieurs des points précédents, le substrat de l'étape b) comprenant un ou plusieurs dispositifs de couplage, les mêmes ou différents, sélectionnés au sein du groupe consistant en de la fibre d'optique, des diodes, des photodétecteurs, des coupleurs ou des découpleurs sur lesquels les gouttes sont déposées.

**6.** Article micro-optique productible par un procédé conforme au point 1.

**7.** Composition adaptée à la production d'un article micro-optique à l'aide d'une imprimante à jet d'encre, la composition comprenant ou consistant en les éléments suivants :

　　i. un polymère hybride organique-inorganique et un initiateur de polymérisation, ainsi qu'un solvant inerte

　　　　- ce polymère hybride organique-inorganique comprenant ou consistant en une ou plusieurs unités organiques à base de méthacrylate rattachées à un réseau Si-O-Si inorganique
　　　　- cet initiateur de polymérisation consistant en un ou plusieurs composants initiateurs de polymérisation sélectionnés au sein du groupe de photoinitiateurs, et
　　　　- ce solvant inerte étant du gamma-butyrolactone, ou

　　ii. une résine époxyde, un initiateur de polymérisation et un solvant inerte avec un diluant réactif

　　　　- cette résine époxyde comprenant ou consistant en une ou plusieurs résines d'époxyde à base de phénol;
　　　　- cet initiateur de polymérisation consistant en un ou plusieurs initiateurs de polymérisation sélectionnés au sein du groupe de photoinitiateurs;
　　　　- ce solvant inerte consistant en un ou plusieurs solvants inertes sélectionnés au sein du groupe consistant en du gammabutyrolactone, du cyclopentanone, de l'heptanone, de l'acétate d'éthyle *propylène glycol monométhyle et de* la méthylisobutylcétone, et ce diluant réactif consistant en un ou plusieurs diluants réactifs sélectionnés au sein du groupe d'époxydes multifonctionnels contenant des monomères.

**8.** Composition conforme au point 7, la composition i) ou ii) comprenant ou consistant en une ou plusieurs nanoparticules, les mêmes ou différentes, sélectionnées au sein du groupe de $SiO_2$, ZnS ou $TiO_2$.

**9.** Composition conforme au point 7 ou 8, la composition i) comprenant un diluant réactif, de préférence sélectionné au sein d'un groupe consistant en des acrylates aliphatiques, cycloaliphatiques ou aromatiques monofonctionnels ou multifonctionnels ou des monomères méthacrylates.

**10.** Composition conforme à tout point allant de 7 à 9, la composition ayant une viscosité dynamique ($\mu$) allant de 3 à 500 mPas.

**11.** Utilisation d'une composition conforme à tout point allant de 7 à 10 pour la production d'un article micro-optique à l'aide d'une imprimante à jet d'encre.

**12.** Utilisation d'un article micro-optique conformément au point 6 dans le domaine de l'optique, de l'opto-électronique ou en tant que structure de moulage.

Fig. 1

EP 2 159 040 B1

Fig. 2

Fig. 3

Fig. 4

Fig. 5a

Fig. 5b

Fig. 5c

Figs. 6a), 6b), 6c), 6d)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0494924 B1
- DE 10057526 A1
- WO 9523037 A1
- JP 2005254097 A

### Non-patent literature cited in the description

- **B. P. KEYWORTH et al.** *Appl.Opt.,* vol. 36, 2198-2202
- **J. C. CARTER et al.** *UCRL-JRNL-210157,* 2005, vol. 2
- **V. FAKHFOURI et al.** MEMS 2/2008 it has for the first time been disclosed that the epoxy based resist SU-8. *Mico.Chem.Corp.*
- Deposition of micropatterned coating using an ink-jet technique. **R. DANZEBRINK et al.** Thin Solid Films. Elsevier-Sequoia, 30 August 1999, vol. 351, 115-118
- **G.O. THOMAS.** *Atomization and Sprays,* 2003, vol. 13 (1), 117-129
- **FROMM, J.E.** *IBM Journal of Research and Development,* 1984, vol. 28 (3), 322-333
- **REIS, N. ; C. AINSLEY ; B. DERBY.** *Journal of Applied Physics,* 2005, vol. 97 (9), 094903-6
- **M. ROBERTSON et al.** *International Microelectronics and Packaging Society -IMAPS-: 13th European Microelectronics and Packaging Conference & Exhibition,* 2001, 30.5, , 1.6